# EUROPÄISCHE PATENTSCHRIFT

(11) **EP 2 454 323 B1**
(45) Veröffentlichungstag und Bekanntmachung des Hinweises auf die Patenterteilung: **15.08.2018**
(21) Anmeldenummer: 10720924.9
(22) Anmeldetag: 25.05.2010
(51) Int. Cl.: C08L 81/06

(54) **POLYPHENYLSULFON-POLYTETRAFLUORETYLEN-ZUSAMMENSETZUNGEN UND IHRE VERWENDUNG**
POLYPHENYLSULPHONE-POLYTETRAFLUOROETHYLENE COMPOSITIONS AND USE THEREOF
COMPOSITIONS POLYPHÉNYLSULFONE-POLYTÉTRAFLUOROÉTHYLÈNE ET LEUR UTILISATION

(30) Priorität: 13.07.2009 DE 102009027659
(43) Veröffentlichungstag der Anmeldung: 23.05.2012
(73) Patentinhaber: Evonik Röhm GmbH, 64293 Darmstadt (DE)
(72) Erfinder: BUMANN, Detlef, 64665 Alsbach-Hähnlein (DE); DREXLER, Albert, 64739 Höchst / Odw. (DE); WILLEMANN, Ricardo Luiz, Shanghai 200030 (CN)
(86) Internationale Anmeldenummer: PCT/EP2010/057125
(87) Internationale Veröffentlichungsnummer: WO 2011/006706

(56) Entgegenhaltungen:
- GB-A- 2 441 066
- US-A1- 2006 141 315

## Beschreibung

### Gebiet der Erfindung

Die Erfindung betrifft eine Mischung aus Polyphenylsulfon (PPSU) und Polytetrafluoretylen (PTFE) zur Herstellung von reibungsmindernden Bändern, die als reibungsvermindernde Zwischenlage von flexiblen Fluidleitungen, wie beispielsweise Ölförderleitungen, Verwendung finden (anti-wear-tapes).

### Stand der Technik

GB 2 441 066 (Technip France) beschreibt ein flexibles, mehrschichtig aufgebautes Rohr zum Transport von Kohlenwasserstoffen. Zwischen den zumindest teilweise gegeneinander beweglichen Metallbändern ist ein reibungsverminderndes Kunststoffband angeordnet, dieses Kunststoffband besteht aus einem amorphen Polymer mit einer Glasübergangstemperatur zwischen 175 Grad C und 255 Grad C. Das Band besteht aus Polyphenylsulfon (PPSU) und einem perfluorierten Polymer und einem Polyetheretherketon (PEEK). In einer speziellen Ausführungsform der Erfindung wird eine Mischung aus 85 % Polyphenylsulfon (PPSU) mit 15 % Polytetrafluorethylen (PTFE) gemischt und zu Bändern von 1,5 mm Dicke und ca. 1m Breite extrudiert. Über die Molekulargewichte der verwendeten Kunststoffe wird keine Aussage getroffen.

US 2005/0229991 beschreibt eine ähnliche Anordnung wir GB '066, das Material der Zwischenschicht ist in diesem Fall ein elastomeres thermoplastisches Polymer, wie beispielsweise ein Styrol-Butadien-Styrol-Kautschuk (SBS), ein Styrol-Ethylen-Butadien-Styrol-Coplymer (SEBS) oder ein EPDM (Ethylen-Propylen-Dien) Copolymer, ferner ein Polybutadien, ein Polyisopren oder ein Polyethylen-Butylen-Copolymer.

### Aufgabe

Es bestand also angesichts des diskutierten Standes der Technik die Aufgabe, ein Material und/oder eine Materialmischung für die reibungsvermindernden Bänder in Ölförderleitungen zu finden, das den dort herrschenden Bedingungen (Temperaturen von ca. 130 Grad Celsius, Drücke von 300 bis 400 bar) besser als die Materialien des Standes der Technik angepasst ist.

### Lösung

Die Lösung der erfindungsgemäßen Aufgabe gelingt durch die Zurverfügungsstellung einer homogenen Mischung aus einen Polyphenylsulfon (PPSU) und einem Polytetrafluorethylen (PTFE) mit einem besonders hohen Molekulargewicht und kleiner Korngröße bzw. - Verteilung. Das verwendete PTFE hat ein besonders hohes Molekulargewicht. Es eignet sich aber besonders zur Einarbeitung in Engineering Plastics, die bei sehr hohen Schmelzetemperaturen verarbeitet werden.

Bei der ganzen Entwicklung der erfindungsgemäßen Lösung war entscheidend, daß nur eine sehr gleichmäßige und kleinteilige Verteilung des PTFE über den gesamten Querschnitt in der PPSU Matrix den gewünschten Effekt über die Dauer des Einsatzes, bei der sich die Dicke des tapes reduziert, und besonders ausgeglichene mechanische Eigenschaften sowohl in als auch quer zur Extrusionsrichtung gewährleistet.

### Das Polyphenylsulfon (PPSU)

Als PPSU wird ein Polyphenylsulfon eingesetzt, welches unter der Marke RADEL® R von Solvay Advanced Polymers in den Handel gebracht wird.

Die Wiederholungseinheit des Polymers hat folgende Formel:

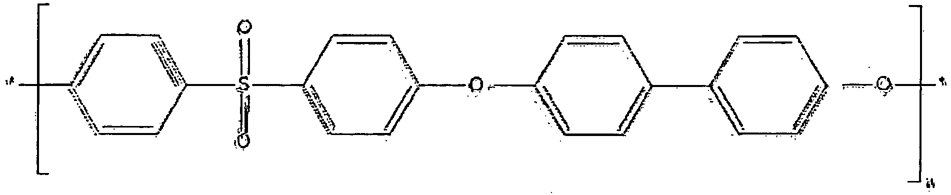

Es handelt sich hierbei um einen transparenten und äußerst wenig spannungsrissempfindlichen Hochleistungskunststoff mit extrem hoher Kerbschlagzähigkeit, auch nach Wärmealterung, und hervorragender chemischer Beständigkeit. Das verwendete RADEL R 5000 nt ist ein nicht flammgeschütztes PPSU, das nicht alle Anforderungen der Luftfahrt erfüllt.

Er wird zur Herstellung von Bauteilen in der Medizintechnik, der chemischen Industrie und in der Sanitärinstallation verwendet. Die Dichte des Polymers beträgt 1,29 g/cm³, gemessen nach ISO 1183, die Streckspannung 70 MPa, gemessen nach ISO 527, die Reißdehnung 60%, gemessen nach ISO 527, das Zug-E-Modul 2.340 MPa, gemessen nach ISO 527, die Izod-Kerbschlagzähigkeit bei 23 Grad Celsius beträgt 49.4 KJ/m², gemessen nach ISO 180/1A, die Charpy- Kerbschlagzähigkeit bei 23 Grad Celsius beträgt 58,3 KJ/m², gemessen nach ISO 179/1eA.

Die Dielektrizitätszahl bei 50 Hz beträgt 3,4, gemessen nach IEC 60250, die Dielektrizitätszahl bei 1 MHz beträgt 3,5, gemessen nach IEC 60250, der dielektrische Verlustfaktor bei 50 Hz beträgt 6 1e-4, gemessen nach IEC 60250. der dielektrische Verlustfaktor bei 1MHz beträgt 76 1e-4, gemessen nach IEC 60250, die Durchschlagfestigkeit beträgt 15 kV/mm, gemessen nach IEC 60243-1, nach ASTM gemessen. Die dicke für die Durchschlagfestigkeit beträgt 3,2 mm, der spezifische Durchgangswiderstand nach IEC 60093 beträgt 9e15 Ohm m.

Die Längenausdehnung längs|quer zur Fließrichtung beträgt 55 10⁻⁶/K, gemessen nach ISO 11359, die Schmelz- bzw. Glasübergangstemperatur beträgt, gemessen nach ISO 11357 215 Grad Celsius, die Wärmeformbeständigkeit A beträgt 207 Grad Celsius, gemessen nach ISO 75 HDT/A (1,8 MPa), die Wärmeformbeständigkeit B beträgt 214 Grad Celsius, gemessen nach ISO 75 HDT/A (0,45 MPa), die maximale Temperatur (kurzzeitig) beträgt 180 Grad Celsius, die maximale Temperatur (dauernd) beträgt 160 Grad Celsius (Wärmealterung nach UL 746 (RTI) Mechanical W/O Imp., 40 000 h). Die minimale Anwendungstemperatur beträgt minus 100 Grad Celsius.

Die vorliegende Erfindung betrifft insbesondere eine Mischung aus Polyphenylsulfon und Polytetrafluoretylen zur Herstellung von Bauteilen, dadurch gekennzeichnet, dass der Gehalt der Mischung an PTFE zwischen 1 Gew.-% und 15 Gew.- % beträgt und dass der Gehalt der Mischung an PPSU zwischen 99 Gew.-% und 85 Gew.-% beträgt.

Bevorzugt beträgt der Gehalt der Mischung an PTFE zwischen 2 Gew.-% und 10 Gew.-% und der Gehalt der Mischung an PPSU zwischen 98 Gew.-% und 90 Gew.-%.

Ganz besonders bevorzugt beträgt der Gehalt der Mischung an PTFE zwischen 5 Gew.-% und 10 Gew.-% und der Gehalt der Mischung an PPSU zwischen 95 Gew.-% und 90 Gew.-%.

Die vorliegende Erfindung betrifft darüber hinaus ein Verfahren zur Herstellung von Kunststoffformkörpern, dadurch gekennzeichnet, dass man die beiden Kunststoffe PPSU und PTFE miteinander mischt und extrudiert. Insbesondere betrifft die Erfindung ein Verfahren, bei dem man die beiden Kunststoffe PPSU und PTFE bei der Temperatur von 340 Grad Celsius bis 385 Grad Celsius miteinander in einem Extruder mischt, das erhaltene Compound granuliert und das Granulat bei 370 Grad Celsius bis 390 Grad Celsius Schneckentemperatur zu Kunststoffformkörpern extrudiert.

Insbesondere ist das erfindungsgemäße Verfahren zur Herstellung von Kunststoffformkörpern dadurch gekennzeichnet, dass man die beiden Kunststoffe PPSU und PTFE bei der Temperatur von 345 Grad Celsius bis 385 Grad Celsius miteinander in einem Extruder mischt, das erhaltene Compound granuliert und das Granulat bei 375 Grad Celsius bis 390 Grad Celsius Schneckentemperatur zu Kunststoffformkörpern extrudiert.

Darüber hinaus betrifft die vorliegende Erfindung die Verwendung der Mischung nach voranstehender Beschreibung zur Herstellung von anti-wear-tapes.

Diese Anti-wear-tape sind erhältlich durch Extrusion einer Mischung nach der voranstehenden Beschreibung.

Auch betrifft die vorliegende Erfindung eine Leitung für ein Fluid, dadurch gekennzeichnet, dass sie mit mindestens einem dieser voranstehend beschriebenen anti-wear-tape ausgerüstet ist.

### Das Polytetrafluorethylen (PTFE)

Als hochmolekulares Polytetrafluorethylen (PTFE) wird ein feinstkörniges Polytetrafluorethylen des Typs Zonyl® MP 1300 eingesetzt. Dieses PTFE eignet sich besonders als Additiv in Polymermischungen basierend auf HT-Thermoplaste.

### Beispiele

### Compoundierungsbeispiele

Eine Mischung aus 95 Gew-% bis 60 Gew-% PPSU und 40 Gew.-% bis 5 Gew.-% PTFE wurde folgendermaßen compoundiert:
In einem Doppelschneckenextruder (Hersteller und Modellbezeichnung: Werner & Pfleiderer ZSK25 WLE (K4)) wird das PPSU bei 345° C bis 380° C Schnecketemperatur und 250 Umdrehungen pro Minute aufgeschmolzen und entgast, das PTFE wird über eine seitliche Einspeiseöffnung zugeführt.

| | **Beispiel 1** | **Beispiel 2** | **Beispiel 3** | **Beispiel 4** | **Beispiel 5** |
|---|---|---|---|---|---|
| **PPSU (Gew.%)** | 95 | 95 | 80 | 60 | 60 |
| **PTFE (Gew.%)** | 5 | 5 | 20 | 40 | 40 |
| **Zylinder-Temperatur(Grad Celsius)** | 345 | 380 | 380 | 380 | 380 |
| **Drehzahl (U/min)** | 200 | 200 | 200 | 200 | 200 |
| **Vakuum (mbar abs.)** | 600 | 600 | 600 | 600 | 600 |

Das erhaltene Compound wurde granuliert.

Die erfindungsgemäße Platte kann in an sich bekannter Weise durch Extrusion aus dem im ersten Schritt erhaltenen Granulat hergestellt werden.

Dazu wird thermisch plastifizierte Schmelze bei der Einfachextrusion über einen bzw. bei der Coextrusion über mehrere Extruder erzeugt und in ein Extrusionswerkzeug eingespeist. Zwischen Extruder und Extrusionsdüse können in an sich bekannter Weise zusätzliche Vorrichtungen wie z. B. eine Schmelzepumpe und/oder ein Schmelzefilter angeordnet sein. Die extrudierten Bahnen können anschließend einem Glattwerk oder einer Kalibriereinrichtung zugeführt werden.

Das Granulat wurde erneut aufgeschmolzen und zu Bändern mit den Abmessungen 1.000 mm Länge, 150 mm Breite und Dicke 1,5 mm extrudiert. Die Schmelzetemperatur betrug ca. 385 Grad Celsius.

### Extrusionsbeispiele

Beispiel 6 betrifft ein Band mit der Zusammensetzung nach Beispiel 1, das Granulat wurde bei 347 Grad Celsius Schmelzetemperatur zu einem Band extrudiert.

Beispiel 7 betrifft ein Band mit der Zusammensetzung nach Beispiel 1, das Granulat wurde bei 379 Grad Celsius Schmelzetemperatur zu einem Band extrudiert.

Beispiel 8 betrifft ein Band mit der Zusammensetzung nach Beispiel 1, das Granulat wurde bei 380 Grad Celsius Schmelzetemperatur zu einem Band extrudiert.

Beispiel 9 betrifft ein Band mit der Zusammensetzung nach Beispiel 2, das Granulat wurde bei 347 Grad Celsius Schmelzetemperatur zu einem Band extrudiert.

Beispiel 10 betrifft ein Band mit der Zusammensetzung nach Beispiel 2, das Granulat wurde bei 358 Grad Celsius Schmelzetemperatur zu einem Band extrudiert.

Beispiel 11 betrifft ein Band mit der Zusammensetzung nach Beispiel 1, das Granulat wurde bei 350 Grad Celsius Schmelzetemperatur zu einem Band extrudiert.

Beispiel 12 betrifft ein Band mit der Zusammensetzung nach Beispiel 4 oder 5, das Granulat wurde bei 352 Grad Celsius Schmelzetemperatur zu einem Band extrudiert.

Die erhaltenen Bänder wiesen folgende mechanische Kenngrößen auf:

| | **Beispiel 6** | **Beispiel 7** | **Beispiel 8** | **Beispiel 9** | **Beispiel 10** | **Beispiel 11** | **Beispiel 12** |
|---|---|---|---|---|---|---|---|
| **Elastizitätsmodul in Extrusionsrichtung (MPa)** | 2.174 | 2.183 | 2.135 | 2.174 | 2.152 | 2.188 | 2.172 |
| **Elastizitätsmodul quer zur Extrusionsrichtung (MPa)** | 2.166 | 2.118 | 2.170 | 2.127 | 2.145 | 2.190 | 2.184 |
| **Charpy** | kein Bruch | kein Bruch | kein Bruch | kein Bruch | kein Bruch | kein Bruch | kein Bruch |
| **Gardner** | > 18 | > 18 | > 18 | > 18 | > 18 | > 18 | > 18 |
| **Reibungs-Koeffizient, statisch, obere Oberfläche** | 0,37 | 0,35 | 0,3 | 0,29 | 0,23 | 0,26 | 0,26 |
| **Reibungs-Koeffizient, statisch, untere Oberfläche** | 0,24 | 0,23 | 0,25 | 0,24 | 0,25 | 0,2 | 0,22 |
| **ReibungsKoeffizient, dynamisch, obere Oberfläche** | 0,34 | 0,35 | 0,26 | 0,28 | 0,2 | 0,26 | 0,21 |
| **Reibungs-Koeffizient, dynamisch, untere Oberfläche** | 0,19 | 0,21 | 0,22 | 0,22 | 0,24 | 0,15 | 0,2 |

### Methoden

Der Elastizitätsmodul wurde nach ISO 527-2/1BA/0,5 bestimmt, die Charpy-Schlagzähigkeit nach ISO 179-1/1eA, der Gardner-Test wurde nach ASTM D 5420 durchgeführt und die Reibungskoeffizienten wurde nach ISO 8295 gemessen.

Die erhaltene Mischung eignet sich zur Herstellung von anti-wear-tapes, die zur Herstellung von Leitungen für Fluide eingesetzt werden, wie beispielsweise für flexible Ölförderleitungen.

## Patentansprüche

1. Verfahren zur Herstellung von Kunststoffformkörpern,
**dadurch gekennzeichnet, dass**
man die beiden Kunststoffe PPSU und PTFE bei der Temperatur von 340 Grad Celsius bis 385 Grad Celsius miteinander in einem Extruder mischt, das erhaltene Compound granuliert und das Granulat bei 370 Grad Celsius bis 390 Grad Celsius Schneckentemperatur zu Kunststoffformkörpern extrudiert.

2. Verfahren zur Herstellung von Kunststoffformkörpern gemäß Anspruch 1,
**dadurch gekennzeichnet, dass**
man die beiden Kunststoffe PPSU und PTFE bei einer Temperatur von 345 Grad Celsius bis 385 Grad Celsius miteinander in einem Extruder mischt, das erhaltene Compound granuliert und das Granulat bei 375 Grad Celsius bis 390 Grad Celsius Schneckentemperatur zu Kunststoffformkörpern extrudiert.

3. Mischung aus Polyphenylsulfon und Polytetrafluoretylen zur Herstellung von Bauteilen, herstellbar mit einem Verfahren gemäß Anspruch 1 oder 2
**dadurch gekennzeichnet, dass**
der Gehalt der Mischung an PTFE zwischen 1 Gew.-% und 15 Gew.- % beträgt, dass
der Gehalt der Mischung an PPSU zwischen 99 Gew.-% und 85 Gew.-% beträgt,
und dass das PTFE und das PPSU bei einer Temperatur von 340 °C bis 385 °C in einem Extruder gemischt wurden.

4. Mischung nach Anspruch 3,
**dadurch gekennzeichnet, dass**
der Gehalt der Mischung an PTFE zwischen 2 Gew.-% und 10 Gew.- % beträgt, und dass
der Gehalt der Mischung an PPSU zwischen 98 Gew.-% und 90 Gew.-% beträgt.

5. Mischung nach einem der Ansprüche 3 oder 4
**dadurch gekennzeichnet, dass**
der Gehalt der Mischung an PTFE zwischen 5 Gew.-% und 10 Gew.-% beträgt und dass
der Gehalt der Mischung an PPSU zwischen 95 Gew.-% und 90 Gew.-% beträgt.

6. Verwendung der Mischung nach einem der Ansprüche 3 bis 5 zur Herstellung von anti-wear-tapes.

7. Anti-wear-tape, erhalten durch Extrusion einer Mischung nach den Ansprüchen 3 bis 5.

8. Leitung für ein Fluid,
**dadurch gekennzeichnet, daß**
sie mit mindestens einem anti-wear-tape nach Anspruch 7 ausgerüstet ist.

## Claims

1. Process for producing plastics mouldings,
**characterized in that**
the two plastics PPSU and PTFE are mixed with one another at a temperature of from 340 degrees Celsius to 385 degrees Celsius in an extruder, the resultant compounded material is pelletized, and the pellets are extruded at from 370 degrees Celsius to 390 degrees Celsius screw temperature to give plastics mouldings.

2. Process for producing plastics mouldings according to Claim 1,
**characterized in that**
the two plastics PPSU and PTFE are mixed with one another at a temperature of from 345 degrees Celsius to 385 degrees Celsius in an extruder, the resultant compounded material is pelletized, and the pellets are extruded at from 375 degrees Celsius to 390 degrees Celsius screw temperature to give plastics mouldings.

3. Mixture made of polyphenyl sulphone and polytetrafluoroethylene for producing components, producible using a process according to Claim 1 or 2
**characterized in that**
the PTFE content of the mixture is from 1% by weight to 15% by weight, **in that** the PPSU content of the mixture is from 99% by weight to 85% by weight,
and **in that** the PTFE and the PPSU are mixed at a temperature of from 340°C to 385°C in an extruder.

4. Mixture according to Claim 3,
**characterized in that** the PTFE content of the mixture is from 2% by weight to 10% by weight, and **in that** the PPSU content of the mixture is from 98% by weight to 90% by weight.

5. Mixture according to either of Claims 3 and 4,
**characterized in that**
the PTFE content of the mixture is from 5% by weight to 10% by weight and that
the PPSU content of the mixture is from 95% by weight to 90% by weight.

6. Use of the mixture according to any of Claims 3 to 5 for producing anti-wear tapes.

7. Anti-wear tape obtained by extrusion of a mixture according to Claims 3 to 5.

8. Pipeline for a fluid,
**characterized in that**
it is equipped with at least one anti-wear tape according to Claim 7.

## Revendications

1. Procédé pour la fabrication de corps façonnés en matériau synthétique, **caractérisé en ce qu'**on mélange l'un avec l'autre les deux matériaux synthétiques PPSU et PTFE à une température de 340°C à 385°C dans une extrudeuse, on granule le compound obtenu et on extrude le granulat à une température de la vis sans fin de 370°C à 390°C en corps façonnés en matériau synthétique.

2. Procédé pour la fabrication de corps façonnés en matériau synthétique selon la revendication 1, **caractérisé en ce qu'**on mélange l'un avec l'autre les deux matériaux synthétiques PPSU et PTFE à une température de 345°C à 385°C dans une extrudeuse, on granule le compound obtenu et on extrude le granulat à une température de la vis sans fin de 375°C à 390°C en corps façonnés en matériau synthétique.

3. Mélange de polyphénylsulfone et de polytétrafluoroéthylène pour la fabrication de pièces, pouvant être préparées par un procédé selon la revendication 1 ou 2, **caractérisé en ce que** la teneur du mélange en PTFE est située entre 1% en poids et 15% en poids, **en ce que** la teneur du mélange en PPSU est située entre 99% en poids et 85% en poids et **en ce que** le PTFE et la PPSU ont été mélangés à une température de 340°C à 385°C dans une extrudeuse.

4. Mélange selon la revendication 3, **caractérisé en ce que** la teneur du mélange en PTFE est située entre 2% en poids et 10% en poids et **en ce que** la teneur du mélange en PPSU est située entre 98% en poids et 90% en poids.

5. Mélange selon l'une quelconque des revendications 3 ou 4, **caractérisé en ce que** la teneur du mélange en PTFE est située entre 5% en poids et 10% en poids et **en ce que** la teneur du mélange en PPSU est située entre 95% en poids et 90% en poids.

6. Utilisation du mélange selon l'une quelconque des revendications 3 à 5 pour la fabrication de bandes anti-usure.

7. Bande anti-usure, obtenue par extrusion d'un mélange selon les revendications 3 à 5.

8. Conduite pour un fluide, **caractérisé en ce qu'**elle est pourvue d'au moins une bande anti-usure selon la revendication 7.
